# EUROPÄISCHE PATENTSCHRIFT

(11) **EP 4 229 363 B1**
(45) Veröffentlichungstag und Bekanntmachung des Hinweises auf die Patenterteilung: **26.08.2026**
(21) Anmeldenummer: 20797061.7
(22) Anmeldetag: 19.10.2020
(51) Int. Cl.: G01D 5/24

(54) **KAPAZITIVES DREHWINKELMESSSYSTEM UND VERFAHREN ZUR ADAPTION EINES KAPAZITIVEN DREHWINKELMESSSYSTEMS**
CAPACITIVE ANGLE-OF-ROTATION MEASUREMENT SYSTEM AND METHOD FOR ADAPTING A CAPACITIVE ANGLE-OF-ROTATION MEASUREMENT SYSTEM
SYSTÈME CAPACITIF DE MESURE D'ANGLES DE ROTATION ET PROCÉDÉ D'ADAPTATION D'UN SYSTÈME CAPACITIF DE MESURE D'ANGLES DE ROTATION

(43) Veröffentlichungstag der Anmeldung: 23.08.2023
(73) Patentinhaber: Fraba B.V., 6416 SG Heerlen (NL)
(72) Erfinder: LÖKEN, Michael, 52428 Jülich (DE); VOLKER, Hanno, 52064 Aachen (DE)
(74) Vertreter: terpatent PartGmbB
(86) Internationale Anmeldenummer: PCT/EP2020/079391
(87) Internationale Veröffentlichungsnummer: WO 2022/083846

(56) Entgegenhaltungen:
- EP-A1- 3 159 660
- DE-A1- 102011 087 493
- DE-A1- 102014 224 222
- US-A1- 2019 011 291

## Beschreibung

Die vorliegende Erfindung betrifft Kapazitives Drehwinkelmesssystem zur Erfassung einer Drehbewegung einer Welle, umfassend eine kapazitive Sensoreinheit mit einer Sendeelektrodenanordnung, einer Empfangselektrodenanordnung, die kapazitiv mit der Sendeelektrodenanordnung gekoppelt ist, und einer drehbaren Koppelanordnung, die mit der Welle mitdrehend montierbar ist und die ausgebildet ist, die elektrische Kapazität zwischen der Empfangselektrodenanordnung und der Sendeelektrodenanordnung abhängig von der rotatorischen Position der Koppelanordnung zu verändern, einem Trägersignalgenerator, der elektrisch mit der Sendeelektrodenanordnung verbunden ist und der ausgebildet ist, ein elektrisches Trägersignal mit einer durch einen Trägersignalfrequenzwert vorgegebenen Trägersignalfrequenz zu generieren und in die Sendeelektrodenanordnung einzuspeisen, und einer Auswerteeinheit, die elektrisch mit der Empfangselektrodenanordnung verbunden ist und die ausgebildet ist, ein durch die Einspeisung des Trägersignals in die Sendeelektrodenanordnung der kapazitiven Sensoreinheit an der Empfangselektrodenanordnung der kapazitiven Sensoreinheit erzeugtes elektrisches Messsignal abzugreifen und durch Auswertung des Messsignals einen aktuellen Drehwinkelmesswert zu bestimmen. Die vorliegende Erfindung betrifft ferner ein Verfahren zur Adaption eines kapazitiven Drehwinkelmesssystems.

Derartige kapazitive Drehwinkelmesssysteme sind aus dem Stand der Technik hinlänglich bekannt, beispielweise aus der EP 2 733 468 A1, und werden vielfach auch als kapazitive Winkelmesseinrichtung, kapazitiver Drehwinkelsensor oder kapazitiver Drehgeber bezeichnet. Solche Systeme werden insbesondere zur Steuerung und Überwachung von Elektromotoren, insbesondere Servomotoren, in Maschinen, Anlagen oder Fahrzeugen eingesetzt. Kapazitive Drehwinkelmesssystemen zeichnen sich hierbei insbesondere durch eine kontaktfreie und somit verschleißfreie Sensorik auf, wodurch eine lange Lebensdauer ermöglicht wird.

Typischerweise arbeiten derartige kapazitive Drehwinkelmesssysteme mit einer Trägersignalfrequenz im niedrigen kHz-Bereich, beispielsweise mit einer Trägersignalfrequenz von 25 kHz. In diesem Frequenzbereich arbeiten jedoch typischerweise auch PWM-Signalgeneratoren, die ein pulsweitenmoduliertes PWM-Signal mit einer definierten PWM-Signalfrequenz generieren. Derartige PWM-Signalgeneratoren werden häufig in Elektromotoren zur elektronischen Steuerung der Antriebsleistung verwendet werden. Typische in Elektromotoren verwendete PWM-Signalfrequenzen sind beispielsweise 4 kHz oder 8 kHz. Eine Oberschwingung dieser typischen PWM-Signale liegt bei 24 kHz und somit nahe bei der typischen Trägersignalfrequenz von 25 kHz.

Bei der Verwendung typischer kapazitiver Drehwinkelmesssysteme zur Überwachung von Elektromotoren kann durch das zur Steuerung der Antriebsleistung verwendete PWM-Signal, beziehungsweise dessen Oberschwingungen, ein signifikantes Signalrauschen im Messsignal des Drehwinkelmesssystems erzeugt werden. Das Signalrauschen im Messsignal kann wiederum die Genauigkeit und die Zuverlässigkeit des kapazitiven Drehwinkelmesssystems signifikant beeinträchtigen.

Aus der DE 10 2011 087 493 A1 ist ein kapazitives Drehwinkelmesssystem eingangs genannter Art bekannt, wobei eine Trägersignalfrequenz variiert wird, wenn ein Referenzsignal von einem vorgegebenen Wert abweicht.

Aus der US 2019/0011291 A1 ist ein kapazitiver Sensor bekannt, wobei eine Trägerfrequenz modifiziert wird, wenn festgestellt wird, dass Rauschen in einem modulierten Signal durch Interferenzen ungefähr bei der Trägerfrequenz verursacht wird.

Es stellt sich daher die Aufgabe, ein zuverlässiges und vielseitig einsetzbares kapazitives Drehwinkelmesssystem zu schaffen.

Diese Aufgabe wird durch ein kapazitives Drehwinkelmesssystem mit den Merkmalen des Anspruchs 1 sowie durch ein Verfahren zur Adaption eines kapazitiven Drehwinkelmesssystems mit den Merkmalen des Anspruchs 4 gelöst.

Erfindungsgemäß ist eine Trägersignaladaptionseinheit vorhanden, der im Betrieb des Drehwinkelmesssystems ein Störfrequenzwert bereitgestellt ist und die ausgebildet ist, den die Trägersignalfrequenz vorgebenden Trägersignalfrequenzwert basierend auf dem Störfrequenzwert zu adaptieren. Erfindungsgemäß ist der Störfrequenzwert der Trägersignaladaptionseinheit über einen Datenspeicher bereitgestellt, auf den die Trägersignaladaptionseinheit Zugriff hat und in dem der Störfrequenzwert gespeichert ist. Der Störfrequenzwert kann beispielsweise im Zuge einer Initialisierung vor Inbetriebnahme des Drehwinkelmesssystems oder bei einer Wartung des Drehwinkelmesssystems in den Datenspeicher geschrieben oder auf eine andere Weise über den Datenspeicher bereitgestellt werden. Alternativ kann auch eine automatische Bestimmung und Bereitstellung des Störfrequenzwertes über den Datenspeicher im Betrieb des Drehwinkelmesssystems vorgesehen sein.

Der Störfrequenzwert kann beispielweise der PWM-Signalfrequenz eines Elektromotors entsprechen, der durch das Drehwinkelmesssystem überwacht werden soll. Der Störfrequenzwert kann sich jedoch auch auf die Frequenz eines beliebigen anderen im Betrieb des Drehwinkelmesssystems typischerweise vorliegenden Störsignals beziehen. Der Trägersignaladaptionseinheit können auch mehrere Störfrequenzwerte oder sogar ein Störfrequenzband bereitgestellt werden, wobei Trägersignaladaptionseinheit in diesem Fall ausgebildet ist, den Trägersignalfrequenzwert basierend auf den mehreren Störfrequenzwerten beziehungsweise auf dem Störfrequenzband zu adaptieren.

Die Trägersignaladaptionseinheit ist im Speziellen ausgebildet, den Trägersignalfrequenzwert derart zu adaptieren, dass der Trägersignalfrequenzwert ungleich dem Störfrequenzwert ist und vorzugsweise auch ungleich aller ganzzahliger Vielfachen des Störfrequenzwertes ist. Hierdurch ist ein zu erwartender Störeinfluss durch ein Störsignal mit einer durch den Störfrequenzwert vorgegebenen Störsignalfrequenz minimal. Die erfindungsgemäße Trägersignaladaptionseinheit ermöglicht ferner eine einfache Adaption des Drehwinkelmesssystems an unterschiedliche Anwendungen mit unterschiedlichen Störsignalen und schafft somit ein zuverlässiges und vielseitig einsetzbares kapazitives Drehwinkelmesssystem.

Vorzugsweise ist eine Störfrequenzermittlungseinheit vorhanden, die ausgebildet ist, automatisch einen Störfrequenzwert zu bestimmen und den bestimmten Störfrequenzwert an die Trägersignaladaptionseinheit bereitzustellen. Die Störfrequenzermittlungseinheit kann beispielsweise ausgebildet sein mittels einer Antennenvorrichtung potentiell vorhandene Störstrahlung zu erfassen und den Störfrequenzwert basierend auf der Frequenz der erfassten Störstrahlung zu bestimmen. Die automatische Ermittlung des Störfrequenzwertes ermöglicht eine automatische Adaption des Drehwinkelmesssystems an am Installationsort vorhandene Störquellen. Die erfindungsgemäße Störfrequenzermittlungseinheit schafft somit ein besonders zuverlässiges und vielseitig einsetzbares Drehwinkelmesssystem.

Drehwinkelmesssysteme weisen typischerweise eine Datenschnittstelle auf, über die der aktuelle Drehwinkelmesswert von einer externen Auslesevorrichtung, beispielsweise einer Motorsteuerung eines Elektromotors, auslesbar ist. Bei Elektromotoren arbeiten Motorsteuerung und PWM-Signalgenerator häufig mit einer gemeinsamen Taktrate, sodass eine Auslesefrequenz, mit der im Betrieb der aktuelle Drehwinkelmesswert von der Motorsteuerung über die Datenschnittstelle aus dem Drehwinkelmesssystem ausgelesen wird, typischerweise zumindest näherungsweise einer PWM-Signalfrequenz eines von dem PWM-Signalgenerator erzeugten PWM-Signals entspricht.

In einer bevorzugten Ausführung der vorliegenden Erfindung ist daher die Störfrequenzermittlungseinheit mit der Datenschnittstelle verbunden und ausgebildet, die Auslesefrequenz zu erfassen, mit der der aktuelle Drehwinkelmesswert über die Datenschnittstelle auslesbar ist. Die Störfrequenzermittlungseinheit ist ferner ausgebildet den Störfrequenzwert basierend auf der erfassten Auslesefrequenz zu bestimmen, wobei der bestimmte Störfrequenzwert vorzugsweise gleich der erfassten Auslesefrequenz ist. Alternativ kann die Störfrequenzermittlungseinheit auch ausgebildet sein, den Störfrequenzwert mittels einer mathematischen Formel oder mittels eines gespeicherten Kennfeldes basierend auf der erfassten Auslesefrequenz zu bestimmen. Die Störfrequenzermittlungseinheit ist ferner ausgebildet, den bestimmten Störfrequenzwert an die Trägersignaladaptionseinheit bereitzustellen. Erfindungsgemäß ist die Störfrequenzermittlungseinheit ausgebildet, den bestimmten Störfrequenzwert in einen Datenspeicher zu schreiben, auf den die Trägersignaladaptionseinheit Zugriff hat. Die erfindungsgemäße Störfrequenzermittlungseinheit ermöglicht eine automatische Bestimmung des Störfrequenzwerts im Betrieb des Drehwinkelmesssystems und schafft somit ein besonders zuverlässiges und vielseitig einsetzbares Drehwinkelmesssystem.

Das erfindungsgemäße Verfahren zur Adaption eines kapazitiven Drehwinkelmesssystems umfasst die folgenden Verfahrensschritte:
- Bereitstellen eines Störfrequenzwertes durch Schreiben des Störfrequenzwertes in einen Datenspeicher,
- Ermitteln eines Trägersignalfrequenzwertes basierend auf dem Störfrequenzwert,
- Bereitstellen des Trägersignalfrequenzwertes an einen Trägersignalgenerator,
- Generieren eines elektrischen Trägersignals mit einer durch den Trägersignalfrequenzwert vorgegebenen Trägersignalfrequenz durch den Trägersignalgenerator,
- Einspeisen des Trägersignals in eine Sendeelektrodenanordnung einer kapazitiven Sensoreinheit, und
- Auswerten eines durch die Einspeisung des Trägersignals in die Sendeelektrodenanordnung an einer Empfangselektrodenanordnung der kapazitiven Sensoreinheit erzeugten elektrischen Messsignals zur Bestimmung eines aktuellen Drehwinkelmesswertes.

Für das Ermitteln des Störfrequenzwertes ist vorzugsweise eine Störfrequenzermittlungseinheit vorgesehen, die eine automatische Ermittlung des Störfrequenzwertes im Betrieb des Drehwinkelmesssystems ermöglicht. Alternativ kann der Störfrequenzwert auch manuell bereitgestellt werden, beispielsweise im Zuge einer Initialisierung oder Wartung des Drehwinkelmesssystems.

Für das Ermitteln des Trägersignalfrequenzwertes ist vorzugsweise eine oben beschriebene erfindungsgemäße Trägersignaladaptionseinheit vorgesehen, die ausgebildet ist, einen Trägersignalfrequenzwert zu ermitteln, für den ein zu erwartender Störeinfluss durch ein Störsignal mit einer durch den Störfrequenzwert vorgegebenen Störsignalfrequenz möglichst gering. Im Speziellen ist der ermittelte Trägersignalfrequenzwert ungleich dem Störfrequenzwert und vorzugsweise auch ungleich aller ganzzahliger Vielfachen des Störfrequenzwertes.

Erfindungsgemäß wird der ermittelte Trägersignalfrequenzwert an einen Trägersignalgenerator bereitgestellt, der ein elektrisches Trägersignal mit einer durch den Trägersignalfrequenzwert vorgegebenen Trägersignalfrequenz generiert. Es wird der Trägersignalfrequenzwert in einen Datenspeicher geschrieben, auf den der Trägersignalgenerator Zugriff hat.

Das Trägersignal wird in die Sendeelektrodenanordnung einer konventionellen, aus dem Stand der Technik bekannten kapazitiven Sensoreinheit eingespeist. Hierdurch wird an der Empfangselektrodenanordnung der kapazitiven Sensoreinheit ein Messsignal erzeugt, aus dem mittels aus dem Stand der Technik hinlänglich bekannten Auswertanordnungen/-verfahren ein aktueller Drehwinkelmesswert bestimmt wird.

Durch das erfindungsgemäße Verfahren wird von dem Trägersignalgenerator ein Trägersignal erzeugt, das eine Trägersignalfrequenz aufweist, die eine störungsfreie und zuverlässige Drehwinkelmessung ermöglicht. Das erfindungsgemäße Verfahren ermöglicht ferner eine einfache Adaption des Drehwinkelmesssystems an unterschiedliche Anwendungen mit unterschiedlichen Störsignalen.

Vorteilhafterweise umfasst das erfindungsgemäße Verfahren zur Adaption eines kapazitiven Drehwinkelmesssystems ferner die folgenden Verfahrensschritte:
- Erfassen einer Auslesefrequenz mit der ein aktueller Drehwinkelmesswert über eine Datenschnittstelle des Drehwinkelmesssystems ausgelesen wird, und
- Bestimmen eines Störfrequenzwertes basierend auf der erfassten Auslesefrequenz.

Vorzugsweise ist der bestimmte Störfrequenzwert gleich der erfassten Auslesefrequenz. Alternativ kann der Störfrequenzwert auch mittels einer mathematischen Formel oder mittels eines gespeicherten Kennfeldes basierend auf der erfassten Auslesefrequenz bestimmt werden. Hierdurch wird wie oben bereits beschrieben eine automatische Bestimmung des Störfrequenzwertes im Betrieb des Drehwinkelmesssystems ermöglicht.

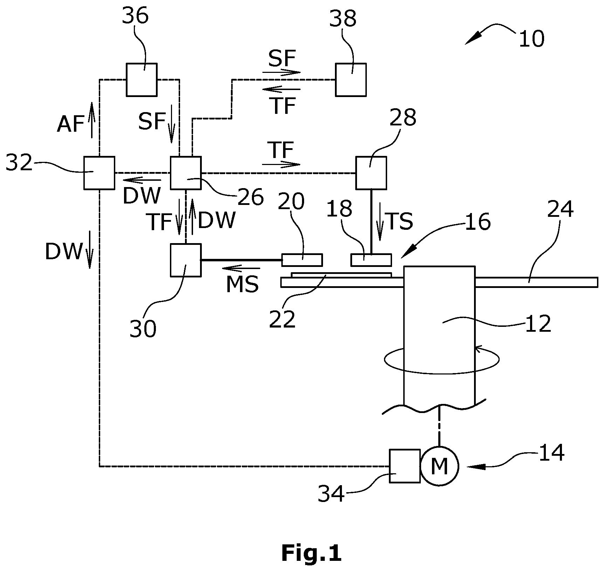

Zwei Ausführungsbeispiele eines erfindungsgemäßen kapazitiven Drehwinkelmesssystems zur Erfassung einer Drehbewegung einer Welle werden nachfolgend anhand der beigefügten Figuren beschrieben, wobei Figur 1 eine schematische Darstellung eines erfindungsgemäßen kapazitiven Drehwinkelmesssystems zeigt, das an einer durch einen Elektromotor angetriebenen Welle angeordnet ist, und

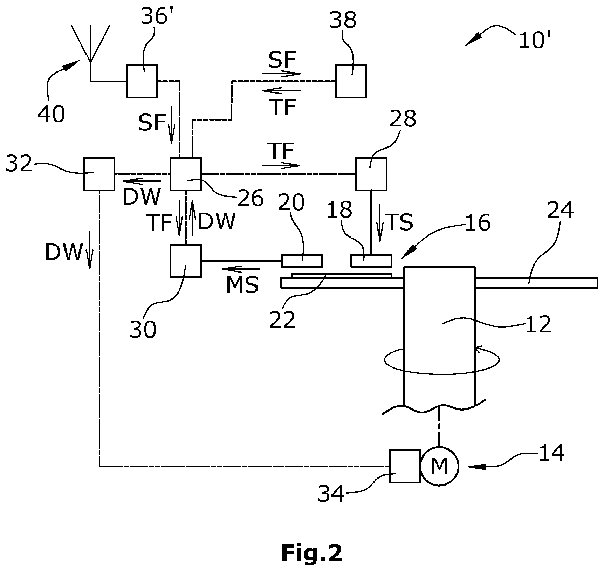

Figur 2 eine schematische Darstellung eines alternativen erfindungsgemäßen kapazitiven Drehwinkelmesssystems zeigt.

Figur 1 zeigt ein kapazitives Drehwinkelmesssystem 10, das an einer Welle 12 angeordnet ist, die durch einen Elektromotor 14 angetrieben ist.

Das kapazitive Drehwinkelmesssystem 10 umfasst eine kapazitive Sensoreinheit 16 mit einer Sendeelektrodenanordnung 18, einer Empfangselektrodenanordnung 20 und einer drehbaren Koppelanordnung 22. Die Sendeelektrodenanordnung 18 und die Empfangselektrodenanordnung 20 sind feststehend angeordnet, beispielsweise an einem Gehäuse oder an einer Statoreinheit des kapazitiven Drehwinkelmesssystems 10, und weisen jeweils eine oder mehrere typischerweise metallische Elektroden aufweisen. Die Koppelanordnung 22 ist im vorliegenden Ausführungsbeispiel an einer Rotorscheibe 24 angeordnet, die drehfest an der Welle befestigt ist. Die Empfangselektrodenanordnung 20 ist über die Koppelanordnung 22 kapazitiv mit der Sendeelektrodenanordnung 18 gekoppelt, wobei die kapazitive Sensoreinheit 16 - wie aus dem Stand der Technik hinlänglich bekannt - derart ausgebildet ist, dass die zwischen der Empfangselektrodenanordnung 20 und der Sendeelektrodenanordnung 18 messbare elektrische Kapazität sich abhängig von der aktuellen rotatorischen Position der Koppelanordnung 22 verändert.

Das kapazitive Drehwinkelmesssystem 10 umfasst einen Datenspeicher 26 in dem mindestens ein Störfrequenzwert SF, ein Trägersignalfrequenzwert TF und ein aktueller Drehwinkelmesswert DW abspeicherbar sind.

Das kapazitive Drehwinkelmesssystem 10 umfasst einen Trägersignalgenerator 28, der elektrisch mit der Sendeelektrodenanordnung 18 verbunden ist und Zugriff auf den Datenspeicher 26 hat. Der Trägersignalgenerator 28 ist ausgebildet, den Trägersignalfrequenzwert TF aus dem Datenspeicher auszulesen und ein elektrisches Trägersignal TS mit einer über den Trägersignalfrequenzwert TF vorgegebenen Trägersignalfrequenz zu generieren und in die Sendeelektrodenanordnung 18 einzuspeisen. Durch das Einspeisen des Trägersignals TS in die Sendeelektrodenanordnung 18 wird - wie aus dem Stand der Technik hinlänglich bekannt ist - an der Empfangselektrodenanordnung 20 ein von der aktuellen rotatorischen Position der Koppelanordnung 22 abhängiges Messsignal MS erzeugt.

Das kapazitive Drehwinkelmesssystem 10 umfasst eine Auswerteeinheit 30, die elektrisch mit der Empfangselektrodenanordnung 20 verbunden ist und Zugriff auf den Datenspeicher 26 hat. Die Auswerteeinheit 30 ist ausgebildet, das an der Empfangselektrodenanordnung 20 erzeugte Messsignal MS abzugreifen und auszuwerten. Die Auswerteeinheit 30 ist im Speziellen ausgebildet, durch die Auswertung des Messsignals MS den aktuellen Drehwinkelmesswert DW zu bestimmen, der die aktuelle rotatorische Position der Koppelanordnung 22 und somit den aktuellen Drehwinkel der Welle 12 angibt. Die Auswerteeinheit 30 ist ferner ausgebildet, den bestimmten aktuellen Drehwinkelmesswert DW in den Datenspeicher 26 zu schreiben.

Das kapazitive Drehwinkelmesssystem 10 umfasst eine Datenschnittstelle 32 die Zugriff auf den Datenspeicher 26 hat. Über die Datenschnittstelle 32 ist der Datenspeicher 26 von extern auslesbar und beschreibbar. Die Datenschnittstelle 32 schafft im vorliegenden Ausführungsbeispiel eine Datenverbindung zu einer Motorsteuerung 34 des Elektromotors 14, über die die Motorsteuerung 34 periodisch den aktuellen Drehwinkelmesswert DW ausliest.

Im vorliegenden Ausführungsbeispiel umfasst das kapazitive Drehwinkelmesssystem 10 eine Störfrequenzermittlungseinheit 36 die mit der Datenschnittstelle 32 verbunden ist und die Zugriff auf den Datenspeicher 26 hat. Die Störfrequenzermittlungseinheit 36 ist ausgebildet eine Auslesefrequenz AF zu erfassen, mit der der aktuelle Drehwinkelmesswert DW über die Datenschnittstelle 32 von der Motorsteuerung 34 ausgelesen wird. Die Störfrequenzermittlungseinheit 36 ist ferner ausgebildet, den Störfrequenzwert SF basierend auf der Auslesefrequenz AF zu bestimmen und den bestimmten Störfrequenzwert SF in den Datenspeicher 26 zu schreiben. In der vorliegenden Ausführung gibt der bestimmte Störfrequenzwert SF die Auslesefrequenz AF an. Es ist jedoch auch vorstellbar, dass der Störfrequenzwert SF mittels einer definierten mathematischen Formel oder mittels eines gespeicherten Kennfeldes aus der Auslesefrequenz AF bestimmt wird.

Es ist jedoch auch ein Drehwinkelmesssystem vorstellbar, dass ohne Störfrequenzermittlungseinheit auskommt. Beispielsweise kann der Störfrequenzwert im Zuge einer Initialisierung oder Wartung des Drehwinkelmesssystems durch eine externe Programmiervorrichtung über die Datenschnittstelle in den Datenspeicher geschrieben werden.

Das kapazitive Drehwinkelmesssystem 10 umfasst eine Trägersignaladaptionseinheit 38, die Zugriff auf den Datenspeicher 26 hat. Die Trägersignaladaptionseinheit 38 ist ausgebildet, den Störfrequenzwert SF aus dem Datenspeicher 26 auszulesen und den in dem Datenspeicher 26 gespeicherten Trägersignalfrequenzwert TF basierend auf dem Störfrequenzwert SF zu adaptieren. Im Speziellen ist die Trägersignaladaptionseinheit 38 ausgebildet, einen Trägersignalfrequenzwert TF zu ermitteln, der ungleich dem Störfrequenzwert SF und ungleich aller ganzzahliger Vielfachen des Störfrequenzwert SF ist und den ermittelten Trägersignalfrequenzwert TF in den Datenspeicher 26 zu schreiben.

Im Betrieb wird von der Motosteuerung 34 periodisch der aktuelle Drehwinkelmesswert DW über die Datenschnittstelle 32 ausgelesen, wobei die Störfrequenzermittlungseinheit 36 die Auslesefrequenz AF erfasst.

Die Störfrequenzermittlungseinheit 36 bestimmt basierend auf der Auslesefrequenz AF den Störfrequenzwert SF und schreib den bestimmten Störfrequenzwert SF in den Datenspeicher 26.

Die Trägersignaladaptionseinheit 38 liest den bestimmten Störfrequenzwert SF aus dem Datenspeicher 26 aus, ermittelt basierend auf dem Störfrequenzwert SF den Trägersignalfrequenzwert TF, und schreibt den ermittelten Trägersignalfrequenzwert TF in den Datenspeicher 26.

Der Trägersignalgenerator 28 liest den ermittelten Trägersignalfrequenzwert TF aus dem Datenspeicher 26 aus, generiert das Trägersignal TS mit der über den Trägersignalfrequenzwert TF vorgegebenen Trägersignalfrequenz und speist das Trägersignal TS in die Sendeelektrodenanordnung 18 der kapazitiven Sensoreinheit 16 ein.

Die Auswerteeinheit 30 liest den Trägersignalfrequenzwert TF aus dem Datenspeicher aus und greift das an der Empfangselektrodenanordnung 20 der kapazitiven Sensoreinheit 16 erzeugte Messsignal MS ab. Die Auswerteeinheit 30 wertet das Messsignal MS basierend auf dem Trägersignalfrequenzwert TF aus, um den aktuellen Drehwinkelmesswerte DW zu bestimmen, und schreibt den bestimmten aktuellen Drehwinkelmesswert DW in den Datenspeicher 26.

Figur 2 zeigt ein alternatives erfindungsgemäßes kapazitives Drehwinkelmesssystem 10'.

Das kapazitive Drehwinkelmesssystem 10' unterscheidet sich von dem kapazitiven Drehwinkelmesssystem 10 durch eine alternative Störfrequenzermittlungseinheit 36' mit einer Antennenvorrichtung 40.

Die Störfrequenzermittlungseinheit 36' ist ausgebildet, über die Antennenvorrichtung 40 potentiell vorhandene Störstrahlung zu erfassen und die Frequenz der Störstrahlung zu ermitteln.

Die Störfrequenzermittlungseinheit 36' bestimmt basierend auf der Frequenz der erfassten Störstrahlung den Störfrequenzwert SF und schreibt diesen in den Datenspeicher 26.

### Bezugszeichenliste

- 10;10': kapazitives Drehwinkelmesssystem
- 12: Welle
- 14: Elektromotor
- 16: kapazitive Sensoreinheit
- 18: Sendeelektrodenanordnung
- 20: Empfangselektrodenanordnung
- 22: Koppelanordnung
- 24: Rotorscheibe
- 26: Datenspeicher
- 28: Trägersignalgenerator
- 30: Auswerteeinheit
- 32: Datenschnittstelle
- 34: Motorsteuerung
- 36;36': Störfrequenzermittlungseinheit
- 38: Trägersignaladaptionseinheit
- 40: Antennenvorrichtung

- AF: Auslesefrequenz
- DW: Drehwinkelmesswert
- MS: Messsignal
- SF: Störfrequenzwert
- TF: Trägersignalfrequenzwert
- TS: Trägersignal

## Patentansprüche

1. Kapazitives Drehwinkelmesssystem (10;10') zur Erfassung einer Drehbewegung einer Welle (12), umfassend:
- eine kapazitive Sensoreinheit (16) mit
• einer Sendeelektrodenanordnung (18),
• einer Empfangselektrodenanordnung (20), die kapazitiv mit der Sendeelektrodenanordnung (18) gekoppelt ist, und
• einer drehbaren Koppelanordnung (22), die mit der Welle (12) mitdrehend montierbar ist und die ausgebildet ist, die elektrische Kapazität zwischen der Empfangselektrodenanordnung (20) und der Sendeelektrodenanordnung (18) abhängig von der rotatorischen Position der Koppelanordnung (22) zu verändern,
- einem Trägersignalgenerator (28), der elektrisch mit der Sendeelektrodenanordnung (18) verbunden ist und der ausgebildet ist, ein elektrisches Trägersignal (TS) mit einer durch einen Trägersignalfrequenzwert (TF) vorgegebenen Trägersignalfrequenz zu generieren und in die Sendeelektrodenanordnung (18) einzuspeisen, und
- einer Auswerteeinheit (30), die elektrisch mit der Empfangselektrodenanordnung (20) verbunden ist und die ausgebildet ist, ein durch die Einspeisung des Trägersignals (TS) in die Sendeelektrodenanordnung (18) an der Empfangselektrodenanordnung (20) erzeugtes elektrisches Messsignal (MS) abzugreifen und durch Auswertung des Messsignals (MS) einen aktuellen Drehwinkelmesswert (DW) zu bestimmen,
**dadurch gekennzeichnet, dass**
eine Trägersignaladaptionseinheit (38) vorhanden ist, der im Betrieb über einen Datenspeicher (26) ein Störfrequenzwert (SF) bereitgestellt ist und die ausgebildet ist, den Trägersignalfrequenzwert (TF) basierend auf dem Störfrequenzwert (SF) zu adaptieren.

2. Kapazitives Drehwinkelmesssystem (10;10') nach Anspruch 1, wobei eine Störfrequenzermittlungseinheit (36;36') vorhanden ist, die ausgebildet ist, automatisch einen Störfrequenzwert (SF) zu bestimmen und den bestimmten Störfrequenzwert (SF) an die Trägersignaladaptionseinheit (38) bereitzustellen.

3. Kapazitives Drehwinkelmesssystem (10) nach Anspruch 2, wobei
- eine Datenschnittstelle (32) vorhanden ist, über die der aktuelle Drehwinkelmesswert (DW) von einer externen Auslesevorrichtung (34) auslesbar ist, und
- die Störfrequenzermittlungseinheit (36) mit der Datenschnittstelle (32) verbunden ist und ausgebildet ist,
• eine Auslesefrequenz (AF) zu erfassen, mit der der aktuelle Drehwinkelmesswert (DW) über die Datenschnittstelle (32) auslesbar ist,
• den Störfrequenzwert (SF) basierend auf der erfassten Auslesefrequenz (AF) zu bestimmen.

4. Verfahren zur Adaption eines kapazitiven Drehwinkelmesssystems (10;10'), umfassend:
- Bereitstellen eines Störfrequenzwertes (SF) durch Schreiben des Störfrequenzwertes (SF) in einen Datenspeicher (26),
- Ermitteln eines Trägersignalfrequenzwertes (TF) basierend auf dem Störfrequenzwert (SF),
- Bereitstellen des Trägersignalfrequenzwertes (TF) an einen Trägersignalgenerator (28),
- Generieren eines elektrischen Trägersignals (TS) mit einer durch den Trägersignalfrequenzwert (TF) vorgegebenen Trägersignalfrequenz durch den Trägersignalgenerator (28),
- Einspeisen des Trägersignals (TS) in eine Sendeelektrodenanordnung (18) einer kapazitiven Sensoreinheit (16), und
- Auswerten eines durch die Einspeisung des Trägersignals (TS) in die Sendeelektrodenanordnung (18) an einer Empfangselektrodenanordnung (20) der kapazitiven Sensoreinheit (16) erzeugten elektrischen Messsignals (MS) zur Bestimmung eines aktuellen Drehwinkelmesswertes (DW).

5. Verfahren zur Adaption eines kapazitiven Drehwinkelmesssystems (10) nach Anspruch 4, ferner umfassend:
- Erfassen einer Auslesefrequenz (AF) mit der ein aktueller Drehwinkelmesswert (DW) über eine Datenschnittstelle (32) des Drehwinkelmesssystems (10) ausgelesen wird, und
- Bestimmen eines Störfrequenzwertes (SF) basierend auf der erfassten Auslesefrequenz (AF).

## Claims

1. Capacitive rotary angle measurement system (10; 10') for detecting a rotary movement of a shaft (12), comprising:
- a capacitive sensor unit (16) with
• a transmitting electrode arrangement (18),
• a receiving electrode arrangement (20) which is capacitively coupled to the transmitting electrode arrangement (18), and
• a rotatable coupling arrangement (22) which can be mounted so as to rotate with the shaft (12) and which is configured to vary the electrical capacitance between the receiving electrode arrangement (20) and the transmitting electrode arrangement (18) as a function of the rotational position of the coupling arrangement (22),
- a carrier signal generator (28) which is electrically connected to the transmitting electrode arrangement (18) and which is configured to generate and to feed into the transmitting electrode arrangement (18) an electrical carrier signal (TS) having a carrier signal frequency which is predetermined by a carrier signal frequency value (TF), and
- an evaluation unit (30) which is electrically connected to the receiving electrode arrangement (20) and which is configured to detect an electrical measurement signal (MS) generated at the receiving electrode arrangement (20) by feeding the carrier signal (TS) into the transmitting electrode arrangement (18), and to determine a current rotary angle measurement value (DW) by evaluating the measurement signal (MS),
**characterized in that**
a carrier signal adaptation unit (38) is present, to which, during operation, an interference frequency value (SF) is provided via a data memory (26) and which is configured to adapt the carrier signal frequency value (TF) on the basis of the interference frequency value (SF).

2. Capacitive rotary angle measurement system (10; 10') according to claim 1, wherein an interference frequency determination unit (36; 36') is present which is configured to automatically determine an interference frequency value (SF) and to provide the determined interference frequency value (SF) to the carrier signal adaptation unit (38).

3. Capacitive rotary angle measurement system (10) according to claim 2, wherein
- a data interface (32) is present via which the current rotary angle measurement value (DW) can be read out by an external read-out device (34), and
- the interference frequency determination unit (36) is connected to the data interface (32) and is configured to
• detect a read-out frequency (AF) at which the current rotary angle measurement value (DW) can be read out via the data interface (32), and
• determine the interference frequency value (SF) on the basis of the detected read-out frequency (AF).

4. Method for adapting a capacitive rotary angle measurement system (10; 10'), comprising:
- providing an interference frequency value (SF) by writing the interference frequency value (SF) into a data memory (26),
- determining a carrier signal frequency value (TF) on the basis of the interference frequency value (SF),
- providing the carrier signal frequency value (TF) to a carrier signal generator (28),
- generating an electrical carrier signal (TS) having a carrier signal frequency predetermined by the carrier signal frequency value (TF) by means of the carrier signal generator (28),
- feeding the carrier signal (TS) into a transmitting electrode arrangement (18) of a capacitive sensor unit (16), and
- evaluating an electrical measurement signal (MS), which is generated at a receiving electrode arrangement (20) of the capacitive sensor unit (16) by feeding the carrier signal (TS) into the transmitting electrode arrangement (18), in order to determine a current rotary angle measurement value (DW).

5. Method for adapting a capacitive rotary angle measurement system (10) according to claim 4, further comprising:
- detecting a read-out frequency (AF) at which a current rotary angle measurement value (DW) is read out via a data interface (32) of the rotary angle measurement system (10), and
- determining an interference frequency value (SF) on the basis of the detected read-out frequency (AF).

## Revendications

1. Système capacitif de mesure d'angle de rotation (10 ; 10') pour la détection d'un mouvement rotatif d'un arbre (12), comprenant :
• une unité de détection capacitive (16) comprenant
• un ensemble d'électrodes d'émission (18),
• un ensemble d'électrodes de réception (20), qui est couplé de manière capacitive à l'ensemble d'électrodes d'émission (18), et
• un ensemble de couplage rotatif (22), qui est montable de manière à tourner conjointement avec l'arbre (12) et qui est configuré pour modifier la capacité électrique entre l'ensemble d'électrodes de réception (20) et l'ensemble d'électrodes d'émission (18) en fonction de la position rotative de l'ensemble de couplage (22),
• un générateur de signal porteur (28), qui est connecté électriquement à l'ensemble d'électrodes d'émission (18) et qui est configuré pour générer un signal porteur électrique (TS) ayant une fréquence de signal porteur prédéfinie par une valeur de fréquence de signal porteur (TF), et pour injecter ledit signal porteur électrique (TS) dans l'ensemble d'électrodes d'émission (18), et
• une unité d'évaluation (30), qui est connectée électriquement à l'ensemble d'électrodes de réception (20) et qui est configurée pour prélever un signal de mesure électrique (MS), produit au niveau de l'ensemble d'électrodes de réception (20) par l'injection du signal porteur (TS) dans l'ensemble d'électrodes d'émission (18), et pour déterminer une valeur mesurée actuelle d'angle de rotation (DW) par évaluation du signal de mesure (MS),
**caractérisé en ce que**
une unité d'adaptation de signal porteur (38) est présente, à laquelle, en fonctionnement, une valeur de fréquence perturbatrice (SF) est mise à disposition via une mémoire de données (26), et qui est configurée pour adapter la valeur de fréquence de signal porteur (TF) sur la base de la valeur de fréquence perturbatrice (SF).

2. Système capacitif de mesure d'angle de rotation (10 ; 10') selon la revendication 1,
dans lequel une unité de détermination de fréquence perturbatrice (36 ; 36') est présente, qui est configurée pour déterminer automatiquement une valeur de fréquence perturbatrice (SF) et pour mettre la valeur de fréquence perturbatrice déterminée (SF) à disposition de l'unité d'adaptation de signal porteur (38).

3. Système capacitif de mesure d'angle de rotation (10) selon la revendication 2, dans lequel
• une interface de données (32) est présente, via laquelle la valeur mesurée actuelle d'angle de rotation (DW) peut être lue par un dispositif externe de lecture (34), et
• l'unité de détermination de fréquence perturbatrice (36) est connectée à l'interface de données (32) et est configurée pour
• acquérir une fréquence de lecture (AF) à laquelle la valeur mesurée actuelle d'angle de rotation (DW) peut être lue via l'interface de données (32),
• déterminer la valeur de fréquence perturbatrice (SF) sur la base de la fréquence de lecture acquise (AF).

4. Procédé d'adaptation d'un système capacitif de mesure d'angle de rotation (10 ; 10'), comprenant :
• la mise à disposition d'une valeur de fréquence perturbatrice (SF) par écriture de la valeur de fréquence perturbatrice (SF) dans une mémoire de données (26),
• la détermination d'une valeur de fréquence de signal porteur (TF) sur la base de la valeur de fréquence perturbatrice (SF),
• la mise à disposition de la valeur de fréquence de signal porteur (TF) à un générateur de signal porteur (28),
• la génération, par le générateur de signal porteur (28), d'un signal porteur électrique (TS) ayant une fréquence de signal porteur prédéfinie par la valeur de fréquence de signal porteur (TF),
• l'injection du signal porteur (TS) dans un ensemble d'électrodes d'émission (18) d'une unité de détection capacitive (16), et
• l'évaluation d'un signal de mesure électrique (MS), produit au niveau d'un ensemble d'électrodes de réception (20) de l'unité de détection capacitive (16) par l'injection du signal porteur (TS) dans l'ensemble d'électrodes d'émission (18), pour déterminer une valeur mesurée actuelle d'angle de rotation (DW).

5. Procédé d'adaptation d'un système capacitif de mesure d'angle de rotation (10) selon la revendication 4, comprenant en outre :
• l'acquisition d'une fréquence de lecture (AF) à laquelle une valeur mesurée actuelle d'angle de rotation (DW) est lue via une interface de données (32) du système de mesure d'angle de rotation (10), et
• la détermination d'une valeur de fréquence perturbatrice (SF) sur la base de la fréquence de lecture acquise (AF).
